# EUROPÄISCHE PATENTSCHRIFT

(11) **EP 4 065 662 B1**
(45) Veröffentlichungstag und Bekanntmachung des Hinweises auf die Patenterteilung: **03.01.2024**
(21) Anmeldenummer: 20828290.5
(22) Anmeldetag: 28.11.2020
(51) Int. Cl.: C09K 9/02, A61J 9/02, C09D 11/50, G01K 11/12, C09D 11/037, C09D 11/101

(54) **SAUGFLASCHE MIT FARBUMSCHLAGSINDIKATOR ZUR TEMPERATURKONTROLLE UND DESSEN VERWENDUNG**
SUCTION BOTTLE WITH COLOUR CHANGE INDICATOR FOR TEMPERATURE CONTROL AND ITS USE
BIBERON À INDICATEUR DE CHANGEMENT DE COULEUR DESTINÉ AU CONTRÔLE DE LA TEMPÉRATURE ET SON UTILISATION

(30) Priorität: 28.11.2019 EP 19212361
(43) Veröffentlichungstag der Anmeldung: 05.10.2022
(73) Patentinhaber: MAPA GmbH, 27404 Zeven (DE)
(72) Erfinder: BERGER, Steffen, 27404 Zeven (DE); WAGENKNECHT, Uwe, 21255 Tostedt (DE)
(74) Vertreter: Simandi, Claus
(86) Internationale Anmeldenummer: PCT/EP2020/083816
(87) Internationale Veröffentlichungsnummer: WO 2021/105491

(56) Entgegenhaltungen:
- DE-A1- 3 836 424
- US-A- 4 919 983
- US-A1- 2009 084 692
- US-A1- 2012 205 386
- US-A1- 2019 298 616

## Beschreibung

Die Erfindung betrifft eine Saugflasche mit einem Farbumschlagsindikator aus thermochromen Pigmenten zur Temperaturkontrolle und dessen Herstellung und Verwendung.

Eine übliche Saugflasche, auch Babyflasche genannt, umfasst einen Trinksauger und einen befüllbaren, kreis- oder oval-förmigen Flaschenhohlkörper, der einen Flaschenboden ausbildet und über einen Flaschenhals ein Außengewinde zum Aufschrauben oder zum Aufstecken eines Saugers aufweist. Üblicherweise werden die Flaschenhohlkörper aus Glas oder vorzugsweise aus Thermoplasten hergestellt, wie Polyamid (PA), Polypropylen (PP), Polyethylen (PE), Polyester (PES), insbesondere Polycarbonate (PC) und Polyethylenterephthalat (PET), Polysulfon (PPSU), u.a.

Solche Saugflaschen unterliegen besonderen Anforderungen, insbesondere Hygieneanforderungen. Beispielsweise werden Saugflaschen vaporisiert, ständiger Hitze und Wäsche/Reinigung ausgesetzt und unterliegen dem ständigen und fortwährendem Gebrauch zur Ernährung von Babys und Kleinkindern. Weiterhin werden Saugflaschen mechanisch stark beansprucht und oftmals von Babys und Kleinkindern intensiv bearbeitet (wie z.B. kauen, stoßen, kratzen, werfen, etc.).

Ferner kann bereits im Zuge des bestimmungsgemäßen Gebrauchs einer Saugflasche, insbesondere aufgrund des Füllguts eine Erhitzung der Flaschenoberflächen erfolgen, welche durch den Nutzer, z.B. durch ein Baby oder Kleinkind oder Versorger, regelmäßig berührt werden. Die Hitze des verabreichten Füllguts als auch der Flaschenoberfläche kann zu Verbrennungen der Haut als auch des Mundraums, insbesondere der Gingiva, führen.

Es besteht daher ein hoher Bedarf nach einer sicheren visuellen Anzeige an einer Saugflasche, so dass eine Temperatur angezeigt werden kann, die höher als die Raumtemperatur ist, insbesondere höher als 20 Grad Celsius (293 K). Beispielsweise kann das Füllgut (z.B. heißes Wasser zur Zubereitung einer Trinkspeise) in einer Saugflasche eine Temperatur bis ca. 70 Grad Celsius aufweisen, so dass die Saugflasche ebenfalls eine Hitze von ca. 70 Grad Celsius aufweist.

Im Stand der Technik ist die Visualisierung von höheren Temperaturen auf Oberflächen mit Hilfe von thermochromen Farben beschrieben. Hierzu finden beispielsweise Bedruckungen mit thermochromen Farben oder thermochromen Pigmenten Anwendung, die bei Erreichen einer bestimmten Temperatur einen irreversiblen Farbumschlag erfahren (z.B. Etikett).

CN204395022 offenbart eine Ernährungsflasche mit einem thermosensitiven Punkt und Skalen, wobei thermochrome Farben eingesetzt werden, so dass deren Farbveränderung Temperaturen von z.B. 40 Grad Celsius anzeigen können.

DE 10 2016 202 228 A1 beschreibt die Verwendung von thermochromen Pigmenten zur visuellen Anzeige von Temperaturen auf einer Oberfläche von dentalmedizinischen Instrumenten.

DE 38 36 424 A1 offenbart eine Babyflasche, dadurch gekennzeichnet, dass sie mit einem Spezialetikett oder mit einem Spezial-Aufdruck für den Temperatur-Messbereich versehen ist. Das Etikett dient zur Bestimmung der idealen Trinktemperatur durch reversible Farbton-Änderung. Der Druck des wärmeempfindlichen Temperatur-Messbereiches erfolgt mit thermochromen Druckfarben.

Allerdings besteht die weitere Aufgabe eine Zusammensetzung aus thermochromen Pigmenten bereitzustellen, die den oben beschriebenen besonderen Anforderungen einer Saugflasche gerecht wird, insbesondere muss der Aufdruck in die Saugflasche integriert, migrationsarm, hitzebeständig und mechanisch belastbar sein. Darüber hinaus muss diese Zusammensetzung aus thermochromen Pigmenten in einer Druckfarbe bereitgestellt werden.

Die vorliegende Erfindung stellt sich daher der Aufgabe einen besonders migrationsarmen, hitzebeständigen und mechanisch belastbaren Aufdruck eines Farbumschlagsindikators aufweisend thermochrome Pigmente auf einer Saugflasche bereitzustellen, welche eine sichere visualisierte Anzeige aufweist.

Im Sinne dieser Erfindung sind thermochrome Pigmente unlösliche anorganische und / oder organische Partikel, so dass die Druckfarbe eine Suspension von mikrogroßen Feststoffen in einer Flüssigkeit mit weiteren Farbmitteln aufweist. Die eingesetzten Pigmente sind zumeist organische, anorganische bzw. kristalline Pulver.

Die anorganischen Pigmente sind meistens mineralische Produkte, wie Rutil (Titandioxid, sog. Weißpigment) oder Zinkoxid. Zu den anorganischen Pigmenten zählen auch irisierende Pigmente, die aus Glimmer oder Siliciumdioxid aufgebaut sind.

Bei organischen Pigmenten handelt es sich um unterschiedliche chemische Verbindungen, deren grundlegende Struktur auf Kohlenwasserstoff-Verbindungen aufbaut.

Wenn die Farbe mit diesen Pigment-Partikeln trocknet bzw. aushärtet, sollen die Pigmentteilchen von Bindemitteln benetzt und umschlossen sein und in der Druckfarbe gehalten werden. Dennoch können die Pigmente nachteilig migrieren, insbesondere bei fortdauernder Einwirkung von Hitze, Wasser und hoher mechanischer Belastung. Die Migration ist zu verhindern, da ein Eintreten der Pigmente in den Flascheninhaltsstoff erfolgen kann oder ein Austreten der Pigmente in die Umwelt. Weiterhin ist bei Migration die Funktion des Farbumschlagsindikators nicht mehr gegeben, sodass keine sichere visualisierte Anzeige erfolgt.

Oftmals werden die Pigmente miteinander gemischt, so dass Pigmente mit anderen Pigmenten beladen sind, insbesondere anorganische Pigmente sind mit thermochromen Farben als auch organischen Farbstoffen beladen. Die Mischung dient zur Herstellung verschiedener Farbwerte. Wie hier vorliegend, können ebenfalls thermochrome Farben eingesetzt und beigemischt werden.

Damit ein Pigment in einer Druckfarbe seine Farbkraft ausreichend zur Geltung bringen kann, muss es einerseits vom Bindemittelsystem vollständig umschlossen sein und benetzt sein und andererseits die erforderliche Feinheit (= Korngröße der Partikel) aufweisen, nämlich vorzugsweise eine Partikelgröße von 0,5 bis 1 µm, jedoch nicht größer als 10 µm.

Erfindungsgemäß wird eine Druckfarbe verwendet, enthaltend solche thermochromen Pigmente, die zusätzlich thermochrome Farben neben üblichen Farbstoffen aufweisen.

Ganz besonders bevorzugt sind solche thermochromen Pigmente, welche sich reversibel verhalten, d.h. nach Abkühlung wieder in die Ursprungsfarbe zurückkehren bzw. einen geringen Hysterese-Effekt aufweisen. Solche thermochromen Pigmente als auch thermochromen Farben sind z.B. bei Sintal Chemie GmbH, Hamburg, Deutschland erhältlich.

Der Fachmann ist in der Lage anhand der bekannten thermochromen Pigmente und thermochromen Farbstoffe, diese auszuwählen oder zu mischen und einen gewünschten Farbwert in Abhängigkeit der Temperatur bereitzustellen, insbesondere höher als die Raumtemperatur, insbesondere bis 70 oder 100 Grad Celsius, insbesondere für einen Temperaturbereich von 37-45 Grad Celsius. Hierdurch kann z.B. die Eigenfärbung der Pigmente angepasst werden (z.B. rot oder blau). Ebenso können Farbstoffe verwendet werden, um Anregungs- oder Emissionsspektren der thermochromen Pigmente und thermochromen Farben zu modulieren.

Daher betrifft die Erfindung eine Saugflasche aufweisend einen befüllbaren Flaschenhohlkörper, der einen Flaschenboden ausbildet und über einen Flaschenhals ein Außengewinde zum Aufschrauben oder zum Aufstecken eines Saugers aufweist, enthaltend einen Farbstoffumschlagsindikator für eine Temperatur größer als 20 Grad Celsius bestehend aus einem Aufdruck integriert in die Flaschenoberfläche, wobei der Farbstoffumschlagsindikator aus einer Zusammensetzung erhalten wird, umfassend oder bestehend aus:
i.) 10-30 Gew. % Oligomer ausgewählt aus der Gruppe Polyurethan-, Polyester-, Epoxy- und Polyether-acrylate oder -methaacrylate,
ii.) 20-40 Gew. % Monomer ausgewählt aus der Gruppe mono-, di-, tri-, tetra- und hexafunktionelle Acrylate oder Methaacrylate,
iii.) 1-10 Gew. % Photoinitiatoren,
iv.) 15-35 Gew. % ein oder mehrere thermochrome Pigmente,
wobei der Aufdruck aus der Zusammensetzung mittels eines Siebdruckverfahrens erhalten wird.

Überraschender Weise konnten die Erfinder feststellen, dass eine solche Zusammensetzung, wobei die Monomere und Oligomere als Bindemittel fungieren, die oben genannten Anforderungen an eine Saugflasche erfüllen, bzw. die gestellte Aufgabe lösen. Insbesondere ist der Farbindikator als Aufdruck in die Flaschenoberfläche integriert und migrationsarm, hitzebeständig und mechanisch belastbar. Besonders bevorzugte Oligomere sind Polyurethanacrylat und Polyesteracrylat oder deren Methaacrylate.

Folgende Qualitätstest wurden zumindest bestanden:

### Farbhaftung:

→ Tesa Test und CrossCut Test gemäß DIN EN 14350
→ Vaporisierung (30 Zyklen)
→ Auskochen (30 Zyklen)

### Farbumschlag:

→ nach 50 Zyklen Spülmaschine,
→ nach 30 Mal 10 Minuten auskochen,
→ nach 30 Mal Vaporisieren,
→ nach 30 Zyklen im Flaschenwärmer,
→ nach Einwirkung von Sonnenlicht (UV-Stabilität) à 40 Stunden UV-Licht (3.800 Lux),
→ nach 30 Zyklen Mikrowelle (700W, 4 min.),
→ nach 10 Zyklen Mikrowelle (1.000W, 0,5 min.),
-+ nach 30 Zyklen Mikrowelle Dampfvaporisator.

Insbesondere kann die erfindungsgemäße Zusammensetzung vorteilhaft in einem Siebdruckverfahren eingesetzt werden. Das Siebdruckverfahren ist daher vorteilhaft, da die Erfinder feststellen konnten, dass die schonende und gleichförmige Auftragung die geringste Migration der thermochromen Pigmente erwarten lässt, da die ausgewählten Bindemittel in Gegenwart der o.g. Zusammensetzung besonders schonend die thermochromen Pigmente vollständig benetzen und allumfassend umschließen können.

Daher betrifft die Erfindung ebenfalls ein Verfahren zum Herstellen einer Saugflasche aufweisend einen befüllbaren Flaschenhohlkörper, der einen Flaschenboden ausbildet und über einen Flaschenhals ein Außengewinde zum Aufschrauben oder zum Aufstecken eines Saugers aufweist, enthaltend einen Farbstoffumschlagsindikator für eine Temperatur größer als 20 Grad Celsius bestehend aus einem Aufdruck integriert in die Flaschenoberfläche, wobei der Farbstoffumschlagsindikator aus einer Zusammensetzung erhalten wird, umfassend oder bestehend aus:
i.) 10-30 Gew. % Oligomer ausgewählt aus der Gruppe Polyurethan-, Polyester-, Epoxy- und Polyether-acrylate oder -methaacrylate,
ii.) 20-40 Gew. % Monomer ausgewählt aus der Gruppe mono-, di-, tri-, tetra- und hexafunktionelle Acrylate oder Methaacrylate,
iii.) 1-10 Gew. % Photoinitiatoren,
iv.) 15-35 Gew. % ein oder mehrere thermochrome Pigmente,
wobei der Aufdruck aus der Zusammensetzung mittels eines Siebdruckverfahrens erhalten wird.

In einer weiteren bevorzugten Ausführungsform weisen die thermochromen Pigmente zusätzlich thermochrome Farbstoffe auf, ausgewählt aus der Gruppe:
a.) organische thermochrome Farbstoffe, welche bei Wechsel der Temperatur durch Strukturänderung ihre Farbe ändern, vorzugsweise solche wie 9,9'-Bixanthyliden und 10,10'-Bianthronyliden;
b.) Kombinationen aus einem Leukofarbstoff (z.B. Spirolactone, Spiropyrane) und einem reversiblen Protonendonor (z.B. Bisphenol A, 1,2,3-Triazole) und einem Phasenwechselmaterial (z.B. Paraffin), welche bei Wechsel der Temperatur durch Protonierung/Deprotonierung des Leukofarbstoffs die Farbe wechseln;
c.) Farbstoffe oder Metallkomplexe, einschließlich Chelate, welche ihre Farbintensität temperaturabhängig verändern, z.B. Temperatur-Quenching bei Europiumkomplexen, und
d.) Kombinationen aus mehreren Farbstoffen mit unterschiedlichem Temperaturverhalten (z.B. einer Mischung aus Terbium-, Europium-, Samarium-, Gadolinium-, Neodymkomplexen u.v.a.).

Daher betrifft die Erfindung ebenfalls solche thermochromen Pigmente, die mit einem thermochromen Farbstoff beladen sind und weitere Farbstoffe in einer Druckfarbe aufweisen.

Im Zuge der vorgenannten erreichten Benetzung und Umschluss der thermochromen Pigmente kann ebenfalls deren Beladung mit den thermochromen Farben fixiert und deren Diffusion verhindert werden.

Weiterhin ist bevorzugt, dass die Saugflasche aus mindestens einem Thermoplast besteht, und dieser Thermoplast samt erfindungsgemäßer Zusammensetzung mit UV-Licht zum Erhalten des Aufdrucks aktiviert wird.

Zudem ist bevorzugt, dass die Saugflasche aus Glas besteht und dieses Glas samt erfindungsgemäßer Zusammensetzung mit UV-Licht zum Erhalten des Aufdrucks aktiviert wird.

Des Weiteren kann die Saugflasche einen ersten Klarlack aufweisen. Zudem ist bevorzugt, dass das UV-Licht ebenfalls zum Aushärten des Aufdrucks eingesetzt wird.

Gerade das Siebdruckverfahren erfordert kurze Zeiten zur Integration des Farbumschlagsindikators als Aufdruck in die Flaschenoberfläche in einer Druckfarbe in eine rotierende Saugflasche.

Im Rahmen dieser Erfindung ist ein Siebdruckverfahren ein solches, wobei die Druckform aus einem Rahmen besteht, der mit einem Gewebe/Sieb bespannt ist. An das Gewebe/Sieb wird eine Schablone angebracht. Die Schablone verhindert an denjenigen Stellen des Druckbildes, die nicht drucken sollen, den Farbauftrag und zwar des Farbumschlagsindikators als Aufdruck in die Flaschenoberfläche in einer Druckfarbe. An offenen Stellen der Schablone entsteht das Druckbild und zwar des Farbumschlagsindikators als Aufdruck in die Flaschenoberfläche in einer Druckfarbe.

Die Druckform wird in einer Druckmaschine an eine in der Hitze erwärmte rotierende Saugflasche angebracht. Dann wird die erfindungsgemäße Druckfarbe auf das Gewebe/Sieb aufgetragen und mit einer Gummirakel durch die offenen Stellen der Schablone auf das Material gleichförmig gestrichen (gerakelt). Die Farbe wird durch die Maschen des Gewebes/Siebes gedruckt und auf die Oberfläche der Saugflasche aufgetragen. Nach dem Druck wird die bedruckte Saugflasche der Maschine entnommen und zum Trocknen ausgelegt.

In einer weiteren bevorzugten Ausführungsform weist die Zusammensetzung Additive mit 1-5 Gew. % auf, insbesondere ausgewählt aus der Gruppe Verlaufsmittel, Entschäumer, Dispergiermittel, Untergrundnetzmittel.

Weiterhin sind die Photoinitiatoren (hier: Radikalbildner) vorzugsweise ausgewählt aus der Gruppe Phosphinoxidderivate, Thioxanthone und Acetophenonderivate, welche mit Licht, insbesondere UV-Licht aktiviert werden können und die erfindungsgemäß genannten Monomere und Oligomere zur Polymerisation aktivieren.

In einer weiteren bevorzugten Ausführungsform ist die Saugflasche ein Thermoplast, insbesondere ausgewählt aus Polyamid (PA) oder Polypropylen (PP), wobei der Flaschenmantel, welcher den Flaschenboden mit dem Flaschenhals verbindet, eine Dicke von 0,7 bis 1,5 mm aufweist.

In einer weiteren bevorzugten Ausführungsform ist die Saugflasche aus Glas, wobei der Flaschenmantel, welcher den Flaschenboden mit dem Flaschenhals verbindet, eine Dicke von 2 mm aufweist.

Das positive Druckbild und zwar des Farbumschlagsindikators als Aufdruck in die Flaschenoberfläche kann in verschiedenen Formen oder Symbolen ausgebildet sein, insbesondere in Form eines Warnsymbols, wie Warndreieck, Ausrufezeichen oder in Form eines Thermometers, ggfs. skaliert. Der Farbumschlag auf der Saugflasche erfolgt in einer gewünschten Temperaturzone, vorzugsweise bei 37 - 45 Grad Celsius. Daher betrifft die Erfindung eine Saugflasche mit einer Verwendung zum visuellen Hinweis auf eine Verbrennungsgefahr, wobei der Farbstoffumschlagsindikator eine Temperatur größer als 37 Grad Celsius anzeigt.

Weiterhin ist bevorzugt, dass der Farbumschlag von z.B. blau nach rot erfolgt oder von blau nach farblos, wobei jeweils nach Abkühlung die Ursprungsfarbe (reversibel) sichtbar ist.

Weiterhin ist bevorzugt, dass das Druckbild in mindestens einer länglichen Form vom Flaschenboden bis zum Flaschenhals ausgebildet ist, insbesondere in Form eines Balkens oder in Form einer Linie, durchgezogen oder unterbrochen, ggfs. unter Ausbildung von Punkten und Kreisen o.a. Symbolen ausgeführt.

Diese Ausführungsform ist besonders vorteilhaft beim Kippen der Saugflasche, falls das heiße Füllgut zum Trinken zum Flaschenhals wandert oder das Füllgut nachgefüllt wird.

Weiterhin ist bevorzugt, dass drei oder vier solche Druckbilder jeweils im Abstand von 120 Grad oder 90 Grad auf der runden oder ovalen Flaschenoberfläche aufgedruckt sind.

### Figuren:

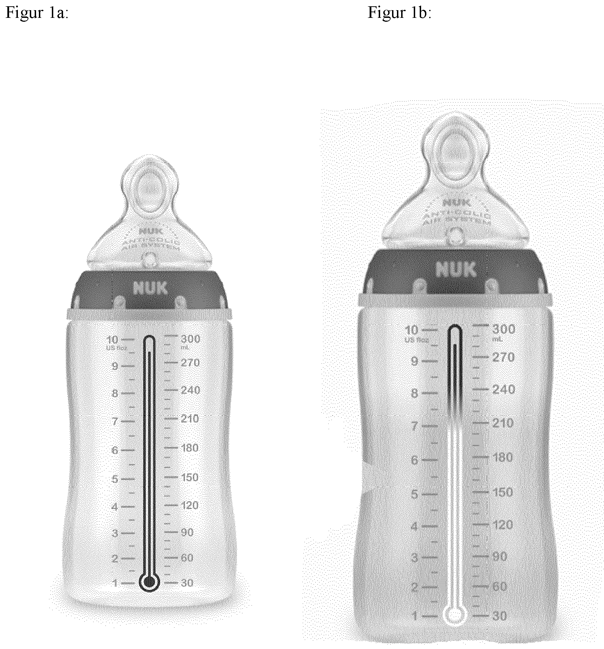

Figur 1a: Saugflasche (leer)
Figur 1b: Saugflasche mit heißem Füllgut, wobei der Aufdruck den Farbumschlag anzeigt.

## Patentansprüche

1. Saugflasche aufweisend einen befüllbaren Flaschenhohlkörper, der einen Flaschenboden ausbildet und über einen Flaschenhals ein Außengewinde zum Aufschrauben oder zum Aufstecken eines Saugers aufweist, enthaltend einen Farbstoffumschlagsindikator für eine Temperatur größer als 20 Grad Celsius bestehend aus einem Aufdruck integriert in die Flaschenoberfläche, **dadurch gekennzeichnet, dass** der Farbstoffumschlagsindikator aus einer Zusammensetzung erhalten wird, umfassend:
i.) 10-30 Gew. % Oligomer ausgewählt aus der Gruppe Polyurethan-, Polyester-, Epoxy- und Polyether-acrylate oder -methaacrylate,
ii.) 20-40 Gew. % Monomer ausgewählt aus der Gruppe mono-, di-, tri-, tetra- und hexafunktionelle Acrylate oder Methaacrylate,
iii.) 1-10 Gew. % Photoinitiatoren,
iv.) 15-35 Gew. % ein oder mehrere thermochrome Pigmente,
wobei der Aufdruck aus der Zusammensetzung mittels eines Siebdruckverfahrens erhalten wird.

2. Saugflasche nach Anspruch 1, **dadurch gekennzeichnet, dass** die Saugflasche aus mindestens einem Thermoplast besteht und Thermoplast und Zusammensetzung mit UV-Licht zum Erhalten des Aufdrucks aktiviert wird und mit Hilfe von UV-Licht ausgehärtet wird.

3. Saugflasche nach Anspruch 2, **dadurch gekennzeichnet, dass** zumindest ein Thermoplast aus der Gruppe Polyamid (PA) Polypropylen (PP), Polyester (PES), Polysulfon (PPSU) ausgewählt ist.

4. Saugflasche nach Anspruch 1, **dadurch gekennzeichnet, dass** die Saugflasche aus Glas besteht und Glas und Zusammensetzung mit UV-Licht zum Erhalten des Aufdrucks aktiviert wird und mit Hilfe von UV-Licht ausgehärtet wird.

5. Saugflasche nach einem der vorhergehenden Ansprüche, **dadurch gekennzeichnet, dass** die thermochromen Pigmente mit einem thermochromen Farbstoff beladen sind und optional weitere Farbstoffe in einer Druckfarbe aufweisen.

6. Saugflasche nach einem der vorhergehenden Ansprüche, **dadurch gekennzeichnet, dass** die Zusammensetzung Additive mit 1-5 Gew. % enthält, insbesondere ausgewählt aus der Gruppe Verlaufsmittel, Entschäumer, Dispergiermittel, Untergrundnetzmittel.

7. Saugflasche nach einem der vorhergehenden Ansprüche, **dadurch gekennzeichnet, dass** die die Photoinitiatoren ausgewählt sind aus der Gruppe Phosphinoxidderivate, Thioxanthone, Acetophenonderivate.

8. Saugflasche nach einem der vorhergehenden Ansprüche, **dadurch gekennzeichnet, dass** das Druckbild des Aufdrucks die Form eines Warnsymbols aufweist, wie Warndreieck, Ausrufezeichen.

9. Saugflasche nach einem der vorhergehenden Ansprüche, **dadurch gekennzeichnet, dass** das Druckbild des Aufdrucks in mindestens einer länglichen Form vom Flaschenboden bis zum Flaschenhals ausgebildet ist, insbesondere in Form eines Balkens oder in Form einer Linie oder in Form eines Thermometers, jeweils skaliert, durchgezogen oder unterbrochen.

10. Verfahren zum Herstellen einer Saugflasche aufweisend einen befüllbaren Flaschenhohlkörper, der einen Flaschenboden ausbildet und über einen Flaschenhals ein Außengewinde zum Aufschrauben oder zum Aufstecken eines Saugers aufweist, enthaltend einen Farbstoffumschlagsindikator für eine Temperatur größer als 20 Grad Celsius bestehend aus einem Aufdruck integriert in die Flaschenoberfläche, wobei der Farbstoffumschlagsindikator aus einer Zusammensetzung erhalten wird, umfassend oder bestehend aus:
i.) 10-30 Gew. % Oligomer ausgewählt aus der Gruppe Polyurethan-, Polyester-, Epoxy- und Polyether-acrylate oder -methaacrylate,
ii.) 20-40 Gew. % Monomer ausgewählt aus der Gruppe mono-, di-, tri-, tetra- und hexafunktionelle Acrylate oder Methaacrylate,
iii.) 1-10 Gew. % Photoinitiatoren,
iv.) 15-35 Gew. % ein oder mehrere thermochrome Pigmente,
wobei der Aufdruck aus der Zusammensetzung mittels eines Siebdruckverfahrens erhalten wird.

11. Verwendung einer Saugflasche nach einem der Ansprüche 1 bis 9 zum visuellen Hinweis auf eine Verbrennungsgefahr, wobei der Farbstoffumschlagsindikator eine Temperatur größer als 37 Grad Celsius anzeigt.

## Claims

1. Feeding bottle comprising a refillable hollow bottle body, which forms a bottle base and comprises an outer thread over a bottle neck for screwing on or fitting a teat, containing a dye change indicator for a temperature greater than 20 degrees Celsius, consisting of an imprint integrated in the bottle surface, **characterized in that** the dye change indicator is obtained from a composition comprising:
i.) 10-30 wt.% oligomers selected from the group of polyurethane, polyester, epoxy and polyether acrylates or methacrylates,
ii.) 20-40 wt.% monomers selected from the group of monofunctional, difunctional, trifunctional, tetrafunctional and hexafunctional acrylates or methacrylates,
iii.) 1-10 wt.% photoinitiators,
iv.) 15-35 wt.% one or more thermochromic pigments,
the imprint made of the composition being obtained by means of a screen-printing process.

2. Feeding bottle according to claim 1, **characterized in that** the feeding bottle consists of at least one thermoplastic and the thermoplastic and the composition are activated with UV light to obtain the imprint and are cured by means of UV light.

3. Feeding bottle according to claim 2, **characterized in that** at least one thermoplastic is selected from the group of polyamide (PA), polypropylene (PP), polyester (PES), and polysulfone (PPSU).

4. Feeding bottle according to claim 1, **characterized in that** the feeding bottle consists of glass and the composition is activated with UV light to obtain the imprint and is cured by means of UV light.

5. Feeding bottle according to any of the preceding claims, **characterized in that** the thermochromic pigments are loaded with a thermochromic dye and optionally comprise additional dyes in a printing ink.

6. Feeding bottle according to any of the preceding claims, **characterized in that** the composition contains 1-5 wt.% additives, in particular selected from the group of leveling agents, defoamers, dispersing agents, and substrate wetting agents.

7. Feeding bottle according to any of the preceding claims, **characterized in that** the photoinitiators are selected from the group of phosphine oxide derivatives, thioxanthones, and acetophenone derivatives.

8. Feeding bottle according to any of the preceding claims, **characterized in that** the printed image of the imprint is in the shape of a warning symbol, such as a warning triangle or an exclamation mark.

9. Feeding bottle according to any of the preceding claims, **characterized in that** the printed image of the imprint is in at least one elongate shape from the bottle base up to the bottle neck, in particular in the shape of a bar or a line or in the form of a thermometer, with each of these having a scale, being solid or being discontinuous.

10. Method for producing a feeding bottle comprising a refillable hollow bottle body, which forms a bottle base and comprises an outer thread over a bottle neck for screwing on or fitting a teat, containing a dye change indicator for a temperature greater than 20 degrees Celsius, consisting of an imprint integrated in the bottle surface, wherein the dye change indicator is obtained from a composition comprising or consisting of:
i.) 10-30 wt.% oligomers selected from the group of polyurethane, polyester, epoxy and polyether acrylates or methacrylates,
ii.) 20-40 wt.% monomers selected from the group of monofunctional, difunctional, trifunctional, tetrafunctional and hexafunctional acrylates or methacrylates,
iii.) 1-10 wt.% photoinitiators,
iv.) 15-35 wt.% one or more thermochromic pigments,
the imprint made of the composition being obtained by means of a screen-printing process.

11. Use of a feeding bottle according to any of claims 1 to 9 for visually indicating the risk of scalding, wherein the dye change indicator indicates a temperature greater than 37 degrees Celsius.

## Revendications

1. Bouteille à succion présentant un corps creux de bouteille pouvant être rempli, qui forme un fond de bouteille et présente, par l'intermédiaire d'un goulot de bouteille, un filetage extérieur pour le vissage ou l'emboîtement d'une tétine, contenant un indicateur de changement de couleur pour une température supérieure à 20 degrés Celsius, constitué d'une impression intégrée dans la surface de la bouteille, **caractérisée en ce que** l'indicateur de changement de couleur est obtenu à partir d'une composition comprenant :
i.) 10 à 30 % en poids d'oligomère choisi dans le groupe des acrylates ou des méthacrylates de polyuréthane, de polyester, d'époxy et de polyéther,
ii.) 20 à 40 % en poids de monomère choisi dans le groupe des acrylates ou méthacrylates mono-, di-, tri-, tétra- et hexafonctionnels,
iii.) 1-10 % en poids de photoinitiateurs,
iv.) 15-35 % en poids d'un ou plusieurs pigments thermochromes,
l'impression étant obtenue à partir de la composition par un procédé de sérigraphie.

2. Bouteille à succion selon la revendication 1, **caractérisée en ce que** la bouteille à succion est constituée d'au moins une matière thermoplastique et **en ce que** la matière thermoplastique et la composition sont activées par de la lumière UV pour obtenir l'impression et sont durcies à l'aide de lumière UV.

3. Bouteille à succion selon la revendication 2, **caractérisé en ce qu'**au moins un thermoplastique est choisi dans le groupe constitué par le polyamide (PA), le polypropylène (PP), le polyester (PES), le polysulfone (PPSU).

4. Bouteille à succion selon la revendication 1, **caractérisée en ce que** la bouteille à succion est en verre et **en ce que** le verre et la composition sont activés avec de la lumière UV pour obtenir l'impression et sont durcis à l'aide de la lumière UV.

5. Bouteille à succion selon l'une des revendications précédentes, **caractérisée en ce que** les pigments thermochromiques sont chargés d'un colorant thermochromique et comprennent éventuellement d'autres colorants dans une encre d'impression.

6. Bouteille à succion selon l'une des revendications précédentes, **caractérisée en ce que** la composition contient des additifs à raison de 1 à 5 % en poids, notamment choisis dans le groupe des agents d'étalement, des agents antimousses, des agents dispersants, des agents mouillants de fond.

7. Bouteille à succion selon l'une quelconque des revendications précédentes, **caractérisée en ce que** les photoinitiateurs sont choisis dans le groupe constitué par les dérivés d'oxyde de phosphine, les thioxanthones, les dérivés d'acétophénone.

8. Bouteille à succion selon l'une quelconque des revendications précédentes, **caractérisé en ce que** l'image imprimée de l'impression présente la forme d'un symbole d'avertissement, tel qu'un triangle de signalisation, un point d'exclamation.

9. Bouteille à succion selon l'une des revendications précédentes, **caractérisé en ce que** l'image imprimée de l'impression est réalisée sous au moins une forme allongée du fond du biberon jusqu'au goulot, en particulier sous la forme d'une barre ou sous la forme d'une ligne ou sous la forme d'un thermomètre, respectivement gradué, continu ou interrompu.

10. Procédé de fabrication d'une bouteille à succion présentant un corps creux de biberon pouvant être rempli, qui forme un fond de biberon et présente, par l'intermédiaire d'un goulot de biberon, un filetage extérieur pour le vissage ou l'emboîtement d'une tétine, contenant un indicateur de changement de couleur pour une température supérieure à 20 degrés Celsius, constitué d'une impression intégrée dans la surface du biberon, l'indicateur de changement de couleur étant obtenu à partir d'une composition comprenant ou constituée de :
i.) 10 à 30 % en poids d'oligomère choisi dans le groupe des acrylates ou des méthacrylates de polyuréthane, de polyester, d'époxy et de polyéther,
ii.) 20-40 % en poids de monomère choisi dans le groupe des acrylates ou méthacrylates mono-, di-, tri-, tétra- et hexafonctionnels,
iii.) 1-10 % en poids de photoinitiateurs,
iv.) 15-35 % en poids d'un ou plusieurs pigments thermochromes,
l'impression étant obtenue à partir de la composition par un procédé de sérigraphie.

11. Utilisation d'une bouteille à succion selon l'une des revendications 1 à 9 pour indiquer visuellement un risque de brûlure, l'indicateur de virage du colorant indiquant une température supérieure à 37 degrés Celsius.
